## Europäisches Patentamt

(19) ))) **European Patent Office**

**Office européen des brevets**

(11) Veröffentlichungsnummer: **0 202 465**

**A2**

(12) # EUROPÄISCHE PATENTANMELDUNG

(21) Anmeldenummer: **86105075.5**

(22) Anmeldetag: **14.04.86**

(51) Int. Cl.⁴: **B 23 P 19/04**

(30) Priorität: **19.04.85 DE 8511616 U**

(43) Veröffentlichungstag der Anmeldung:
**26.11.86 Patentblatt 86/48**

(84) Benannte Vertragsstaaten:
**DE FR GB IT**

(71) Anmelder: **Wirth Maschinen- und Bohrgeräte-Fabrik GmbH**
**Kölner Strasse 71-78**
**D-5140 Erkelenz(DE)**

(72) Erfinder: **Henschenmacher, Helmut**
**Schwarzer Weg 26**
**D-5142 Brachelen(DE)**

(74) Vertreter: **Koscholke, Gotthold, Dr.-Ing.**
**Rheinallee 147**
**D-4000 Düsseldorf 11(DE)**

(54) **Manipulator für Deckelverschluss-Teile.**

(57) Um bei einem Manipulator mit einem Untergestell und einem darauf befindlichen Aufsatz eine günstige Positionierung und Lagekorrekturen zu ermöglichen, weist das Untergestell (21) einen Basisteil (3) und einen oberhalb desselben angeordneten Tragkörper (4) auf, der mit dem Basisteil (3) durch Abstützelemente (5, 6, 7, 8) in seiner Lage relativ zum Basisteil (3) einstellbar verbunden ist.

./...

EP 0 202 465 A2

FIG. 1

## Manipulator für Deckelverschluß-Teile

Die Erfindung bezieht sich auf einen Manipulator nach dem Oberbegriff des Anspruchs 1.

Bei derartigen Vorrichtungen führt ein Support oder ein anderer verstellbarer Teil die eigentliche Transportbewegung aus. Die Last, so der Deckel bzw. eine Schraubenspannvorrichtung, kann dabei von einer zusätzlichen Aufnahmeeinrichtung gehalten sein.

Ein einwandfreies Arbeiten beim Öffnungs- oder Schließvorgang setzt voraus, daß der Manipulator bzw. dessen am Arbeitsvorgang beteiligte Elemente die richtige Position bezüglich der Öffnung haben. Bei einem zumindest auf einem wesentlichen Teil seiner Bahn geradlinig verschiebbaren Support, Halter od.dgl. ist es wichtig, daß die Bewegungsbahn parallel zur Mittelachse der Öffnung verläuft. Die Erfüllung dieser Forderungen bereitet vielfach Schwierigkeiten. Dies gilt nicht nur für den Fall, daß ein Manipulator im Bereich eines Deckelverschlusses erstmalig oder erneut angeordnet wird, sondern es kommt auch vor, daß der betreffende Druckbehälter bzw. seine mit dem Deckelverschluß ausgestattete Partie im Lauf der Zeit eine Änderung seiner Lage oder Winkelstellung erfährt. Dies kann besonders unter sich ändernden thermischen Bedingungen vorkommen, etwa bei Dampferzeugern. Ein unabhängig davon an seiner Stelle verbliebener Manipulator ist dann nicht mehr korrekt ausgerichtet.

Aufgabe der Erfindung ist es, einen Manipulator zu schaffen, der sich in günstiger Weise hinsichtlich der Positionierung an die jeweiligen Gegebenheiten anpassen läßt und auch bei Veränderungen der Situation Korrekturen der Lage ermöglicht. Dabei strebt die Erfindung ferner eine vorteilhafte Ausbildung des Manipulators im einzelnen an. Weitere damit im Zusammenhang stehende Probleme, mit denen sich die Erfindung befaßt, ergeben sich auch der jeweiligen Erläuterung der aufgezeigten Lösung.

Bei einem Manipulator der eingangs genannten Art sieht die Erfindung vor, daß das Untergestell einen Basisteil und einen oberhalb desselben angeordneten Tragkörper aufweist, der mit dem Basisteil durch Abstützelemente so verbunden ist, daß er in seiner Lage relativ zum Basisteil einstellbar ist. Eine solche Einstellung wird insbesondere für die Höhenlage des Tragkörpers und für die Neigung desselben wenigstens um eine Achse vorgesehen.

Bei einer vorteilhaften Ausführung weist der Tragkörper einen nach unten gerichteten Führungsansatz auf, der von einem Gelenklager im Basisteil aufgenommen ist. Dadurch ist der Tragkörper relativ zum Basisteil geführt gehalten und kann trotzdem die gewünschten Einstellungen erfahren.

Das Gelenklager enthält zweckmäßig einen in einer Aufnahme winkelbeweglichen Kugelkopf, der eine durchgehende axiale Öffnung mit einer Lageranordnung für den Führungsansatz des Tragkörpers aufweist. Es kann sich insbesondere um eine axiale Wälzlagerung handeln.

Eine sehr günstige Ausführung enthält vier Abstützelemente, die an dem einen der beiden Teile (dem Tragkörper oder insbesondere dem Basisteil) unter Belassung einer Winkelbeweglichkeit mit Bezug auf die Vertikale angreifen und von denen wenigstens zwei als Gewindespindeln ausgebildet sind.

Insbesondere wird die Ausbildung so getroffen, daß vier Gewindespindeln im Tragkörper oder damit verbundenen Teilen schraubbar sind und daß zwei der Spindeln im Basisteil in Gelenklagern winkelbeweglich, aber axial unverschiebbar gehalten sind und daß die beiden anderen Gewindespindeln sich mit ihren unteren Enden in Pfannenlagern auf dem Basisteil abstützen. Dies ist eine Ausführung, die vielseitige Einstellmöglichkeiten sowohl in der der Höhe als auch hinsichtlich der Neigung in den unterschiedlichen Richtungen mit großer Tragfähigkeit und Stabilität verbindet.

Von den beiden letztgenannten Gewindespindeln ist die eine zweckmäßig axial unverschiebbar am Basisteil gehalten, während für die andere Gewindespindel eine freie Abstützung vorgesehen ist, derart, daß sich dieselbe während eines Einstellvorganges vorübergehend auch abheben kann.

Vorteilhaft weist der Tragkörper eine Führung auf, in welcher der Aufsatz verstellbar ist. Zur Erzeugung der Verstellbewegung kann insbesondere ein Spindeltrieb dienen.

Das Untergestell des Manipulators kann je nach den Erfordernissen feststehend angeordnet oder auch verfahrbar sein. Im letztgenannten Fall ist zweckmäßig der Basisteil mit Rädern oder Rollen versehen. Diese können insbesondere in Schienen laufen oder aber auch frei auf einem Planum rollen. Bei vorhandener Einstellbarkeit des Aufsatzes verläuft die Verfahrrichtung des Basisteiles zweckmäßig rechtwinklig zur Verstellrichtung des Aufsatzes relativ zum Tragkörper.

Weitere Einzelheiten, Merkmale und Vorteile der Erfindung ergeben sich aus der nachstehenden Erläuterung von Ausführungsbeispielen, aus der zugehörigen Zeichnung und aus den Ansprüchen. Es zeigen:

Fig. 1 einen Manipulator gemäß der Erfindung in Seitenansicht, teils schematisch,

Fig. 2 ein Untergestell des Manipulators mehr im einzelnen und in größerem Maßstab, zum Teil im Schnitt,

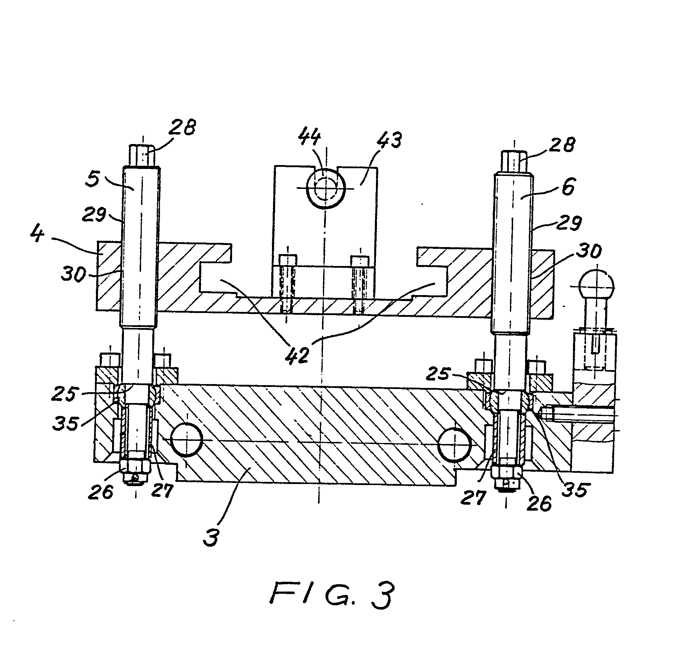

Fig. 3 einen Schnitt nach der Linie III - III in Fig.2 in vergrößertem Maßstab und

Fig. 4 einen Schnitt nach der Linie IV - IV in Fig. 2 in vergrößertem Maßstab.

Der insgesamt mit der Ziffer 1 bezeichnete Manipulator dient zum Handhaben von Teilen, die beim Öffnen und Schließen einer Mannloch-Öffnung M eines Druckbehälters D, etwa eines Dampferzeugers in einem Kernkraftwerk, zu bewegen sind. Es ist lediglich die die Öffnung aufweisende Partie des Druckbehälters wiederge-

geben. Die Öffnung M wird durch einen Deckel V verschlossen, der in bekannter Weise mit Schraubenbolzen und auf diese aufgeschraubte Muttern befestigt wird. Mittels einer Vorrichtung S können die Schraubenbolzen gespannt werden, ehe die Befestigungsmuttern bis zur Anlage angedreht werden. Solche Schraubenspannvorrichtungen sind in verschiedenen Ausführungen bekannt.

Der Manipulator 1 weist ein Untergestell 21 auf, das feststehend oder verfahrbar ausgebildet sein kann. Das Untergestell 21 trägt einen Aufsatz 22, der mit einer Führung 17 für einen mit Rädern 18 ausgestatteten Support 16 versehen ist. Auf dem letzteren befindet sich ein armförmiger Halter 9, der an seinem Ende zur schwenkbaren Aufnahme der Schraubenspannvorrichtung S ausgebildet ist. Bei der dargestellten Ausführung weist die letztere an ihrer Unterseite einen gabelförmigen Ansatz 19 auf, der das Ende des Halters 9 umgreift, wobei ein Gelenkzapfen 20 durch Bohrungen dieser Teile hindurchgesteckt ist.

Mittels eines von einer Handkurbel 23 zu betätigenden Spindeltrieb 24 kann die Schraubenspannvorrichtung S relativ zum Halter 9 im Winkel verstellt werden, insbesondere aus der mit ausgezogenen Linien gezeigten Arbeitsposition, in der ihre Mittelachse mit der Mittelachse A der Öffnung M zusammenfällt, in eine mit strichpunktierten Linien angedeutete waagerechte Ruheposition und umgekehrt. Diese Winkelverstellung kann, wie dargestellt, zusammen mit dem Deckel V erfolgen oder auch ohne diesen.

Als Antrieb zum Bewegen des Supports 16 in seiner Führung 17 ist bei dem gezeigten Ausführungsbeispiel eine hydraulische Kolben-Zylinder-Einheit 10 vorgesehen, deren Kolbenstange 11 einen Lagerkörper 12 mit einem darin frei drehbar gelagerten Zahnrad 13 trägt. Dieses greift einerseits in eine im Aufsatz 22 ebenfalls etwa in dessen Längsmittelebene im Bereich unterhalb der Kolbenstange 11 befestigte Zahnstange 14 und andererseits in eine an der Unterseite des Supports 16 angebrachte Zahnstange 15 ein. Dadurch wird erreicht, daß der Weg, den der Support 16 zurücklegt, doppelt so groß wie der von der Kolbenstange 11 zurückgelegte Weg ist.

Das Untergestell 21 weist einen etwa quadratischen Basisteil 3 und einen mit gewissem Abstand oberhalb desselben angeordneten, ebenfalls etwa quadratischen Tragkörper 4 auf. Letzterer ist durch vier Abstützelemente 5, 6, 7, 8 mit dem Basiskörper 3 verbunden und bei der gezeigten Ausführung sowohl in der Höhe als auch in seiner Neigung relativ zum Basiskörper 3 in verschiedenen Richtungen einstellbar.

Außderdem weist der Tragkörper 4 bei der dargestellten Ausführung einen von seiner Unterseite in deren Mitte ausgehenden, nach unten gerichteten Führungsansatz 41 auf, insbesondere in Form eines zylindrischen Zapfens, der von einem Gelenklager 31 im Basisteil 3 aufgenommen ist und sich durch dieses hindurch erstreckt. Das Gelenklager 31 enthält vorteilhaft einen in einem mehrteiligen Aufnahmekörper 32 mit sphärisch gekrümmter Innenfläche winkelbeweglich gehaltenen Kugelkopf 33 mit einer durchgehenden axialen Lageranordnung 34 für den Führungsansatz 41 des Tragkörpers 4. Bei der Lageranordnung 34 kann es sich um eine Gleitführung, insbesondere aber um eine mit Wälzkörpern ausgestattete Längsführung handeln.

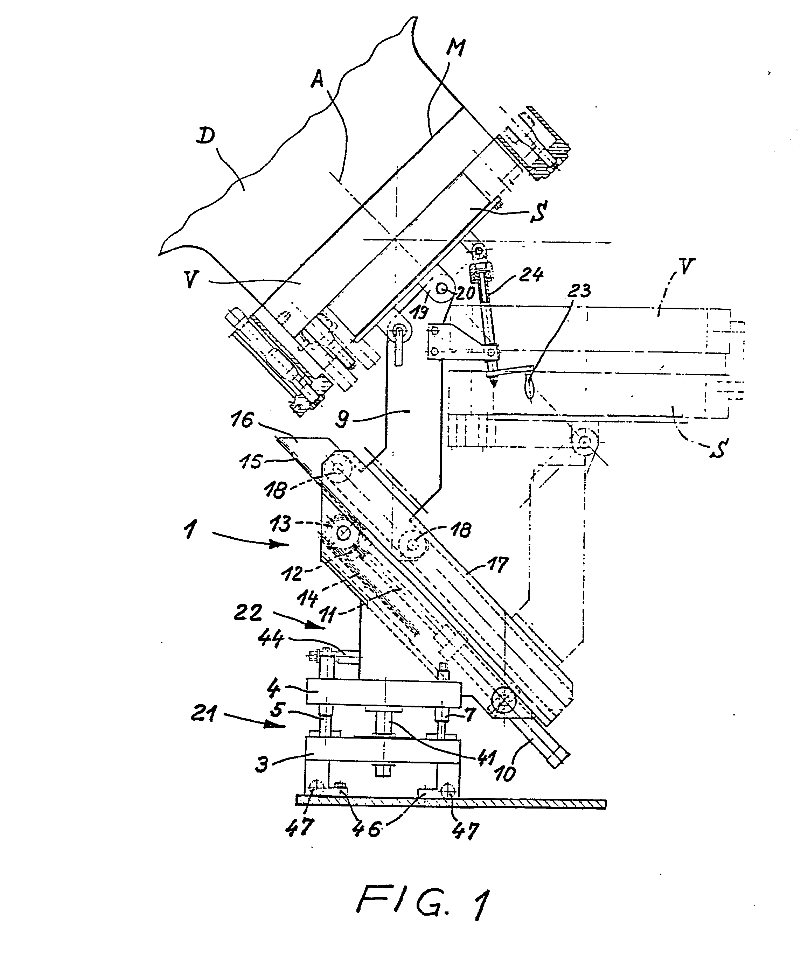

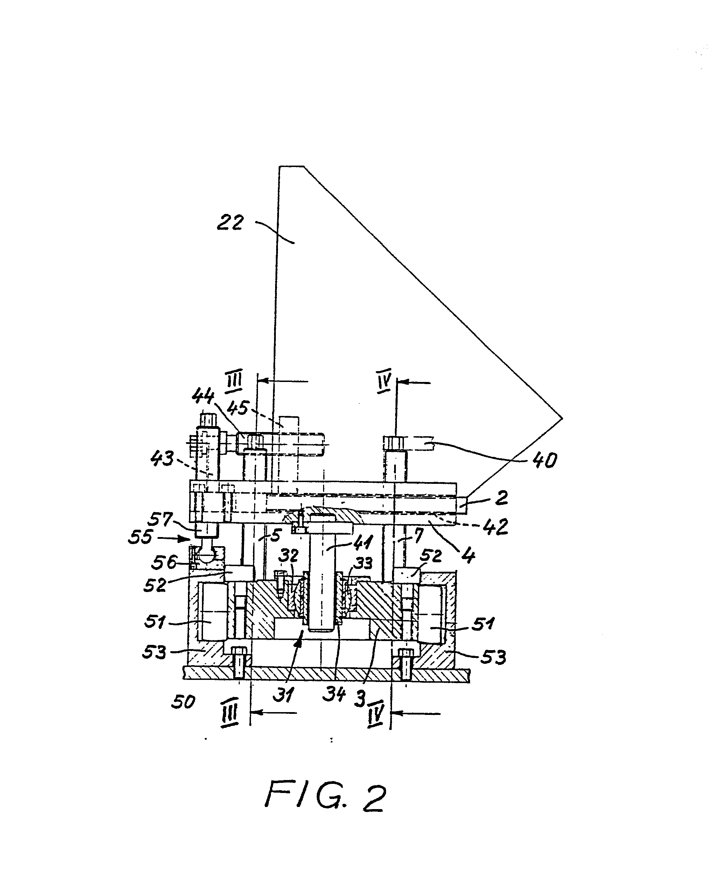

Die vier Abstützelemente 5 bis 8 greifen an dem Basisteil 3 unter Belassung einer Winkelbeweglichkeit mit Bezug auf die Vertikale an. Sie sind als Gewindespindeln ausgebildet, die mit ihren Außengewinden 29 in Innengewinden 30 des Tragkörpers 4 schraubbar sind und an den oberen Enden jeweils einen Mehrkant 28 zum Schlüsselangriff aufweisen. Die auf der dem Aufsatz 22 abgewandten, in Fig. 1 und 2 linken Seite des Untergestells 21 befindlichen Gewindespindeln 5 und 6 sind im Basisteil 3 in Gelenklagern 35 winkelbeweglich, aber axial unverschiebbar gehalten. Letzteres wird jeweils durch eine Schulter 25 auf der einen Seite und eine mittels Mutter 26 angezogene Büchse 27 auf der anderen Seite des Gelenklagers bewirkt.

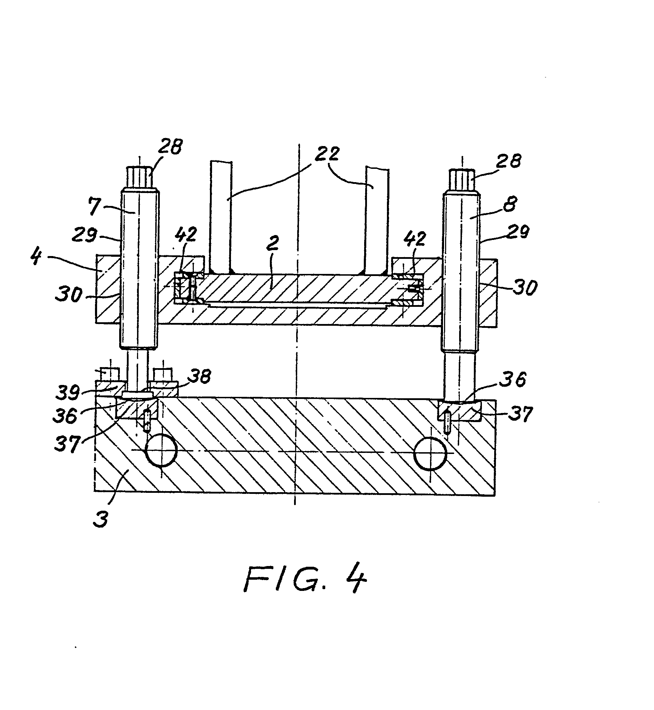

Die beiden anderen, auf der dem Aufsatz 22 zugewandten, in Fig. 1 und 2 rechten Seite des Untergestells 21 angeordneten Gewindespindeln 7 und 8 stützen sich mit ihren unteren, kugelkalottenförmig ausgebildeten Enden 36 in Pfannenlagern 37 auf dem Basisteil 3 ab. Von diesen ist die eine Gewindespindel 7 durch einen eine Schulter 38 übergreifenden geteilten Haltering 39 axial unverschiebbar am Basisteil 3 gehalten, während für die andere Gewindespindel 8 eine freie Abstützung vorgesehen ist, wie Fig. 4 erkennen läßt, so daß diese sich auch vorübergehend von ihrem Lager 37 abheben kann.

Durch Drehen der Gewindespindeln 5, 6, 7, 8 mittels eines Schlüssels oder einer Ratsche (in Fig. 2 bei der Ziffer 40 angedeutet), sei es einzeln, sei es insbesondere auch paarweise gleichzeitig, kann der Tragkörper 4 und damit die gesamte darauf angeordnete Einrichtung nach beliebigen Richtungen hin in seiner Neigung relativ zum Basisteil und auch in der Höhe eingestellt werden. Dadurch kann die Vorrichtung in jedem Fall schnell und genau auf eine Öffnung, von der ein Deckel abgenommen bzw. auf die ein Deckel aufgesetzt werden soll, hin ausgerichtet werden, insbesondere so, daß die Bewegungsrichtung eines Supports 16 oder anderenren verstellbaren Teiles parallel zu der Mittelachse A der betreffenden Öffnung M verläuft.

Der Tragkörper 4 ist mit einer geradlinigen Führung 42 versehen, die eine Grundplatte 2 des Aufsatzes 22 verschiebbar aufnimmt, so daß der letztere relativ zum Tragkörper 4 verstellbar ist. Zur Erzeugung der Bewegung dient eine in einem Widerlager 43 des Tragkörpers 4 drehbar, aber axial unverschiebbar gelagerte Verstellspindel 44, die in einen Mutternteil 45 des Aufsatzes 22 eingreift.

Der Basisteil 3 läßt sich je nach den Erfordernissen fest auf dem Boden montieren oder aber auch verfahrbar ausbilden. In Fig. 1 sind beide Möglichkeiten mit Bolzen 46 und Rädern 47 schematisch angedeutet. Insbesondere kann die Ausführung so getroffen werden, wie es Fig. 2 veranschaulicht. Dabei ist der Basisteil 3 an zwei Seiten mit je zwei Rollen 51 versehen, die in C-förmigen Profilschienen 53 laufen. Letztere sind in der beim jeweiligen Einsatzfall gewünschten Richtung auf dem Boden oder einer Grundplatte 50 befestigt. Zwei weitere Rollenpaare 52 am Basisteil 3 laufen auf den oberen inneren Stirnseiten der Schienen 53. Mit der Ziffer 55 (Fig. 2) ist eine Brems- oder Feststelleinrichtung bezeichnet, bei der ein winkelbeweglich gehaltener Bremsschuh 56 mittels einer im Tragkörper 4 schraubbaren Spindel 57 gegen die Oberseite einer Schiene 53 gepreßt werden kann.

Bei der erläuterten Ausbildung und Anordnung des Aufsatzes 22 und der ihm zugeordneten Teile, insbesondere bei dem Zahnstangenantrieb für den Support 16, handelt es sich um eine besonders vorteilhafte, von der Erfindung in Verbindung mit der Gestaltung des Untergestells vorzugsweise in Betracht gezogene Ausführung. Die Erfindung ist jedoch nicht darauf beschränkt, sondern schließt auch andere von dem erfindungsgemäßen Untergestell getragene Teile und Einrichtungen zum Bewegen einer Schraubenspannvorrichtung und/oder eines Deckels ein.

Alle in der vorstehenden Beschreibung erwähnten bzw. in der Zeichnung dargestellten Merkmale sollen, sofern der bekannte Stand der Technik es zuläßt, für sich allein oder auch in Kombinationen als unter die Erfindung fallend angesehen werden.

Patentansprüche

1. Manipulator für beim Öffnen und Schließen einer mit einem Deckel versehenen Öffnung zu bewegende Teile, insbesondere für eine Schraubenspannvorrichtung und/oder den Deckel, namentlich beim Verschluß der Mannlöcher von Druckbehältern, vornehemlich bei Dampferzeugern, mit einem Untergestell und einem darauf befindlichen Aufsatz od.dgl., insbesondere mit einer Führung für einen verschiebbaren Support od.dgl., dadurch gekennzeichnet, daß das Untergestell (21) einen Basisteil (3) und einen oberhalb desselben angeordneten Tragkörper (4) aufweist, der mit dem Basisteil (3) durch Abstützelemente (5, 6, 7, 8) in seiner Lage relativ zum Basisteil (3) einstellbar verbunden ist.

2. Manipulator nach Anspruch 1, dadurch gekennzeichnet, daß der Tragkörper (4) einen nach unten gerichteten Führungsansatz (41) aufweist, der von einem Gelenklager (31) im Basisteil (3) aufgenommen ist.

3. Manipulator nach Anspruch 2, dadurch gekennzeichnet, daß das Gelenklager (31) einen in einer Aufnahme (32) winkelbeweglich gehaltenen Kugelkopf (33) mit einer durchgehenden axialen Lageranordnung (34) für den Führungsansatz (41) des Tragkörpers (4) aufweist.

4. Manipulator nach einem der Ansprüche 1 bis 3, dadurch gekennzeichnet, daß zwischen dem Basisteil (3) und dem Tragkörper (4) vier Abstützelemente (5, 6, 7, 8) für den letzteren vorgesehen sind, die an dem einen der beiden Teile (3, 4) unter Belassung einer Winkelbeweglichkeit mit Bezug auf die Vertikale angreifen und von denen wenigstens zwei als Gewindespindeln ausgebildet sind.

5. Manipulator nach Anspruch 4, gekennzeichnet durch zwei im Tragkörper (4) oder damit verbundenen Teilen schraubbare Gewindespindeln (5, 6), die im Basisteil (3) in Gelenklagern (35) winkelbeweglich, aber axial unverschiebbar gehalten sind, und durch zwei weitere im Tragkörper (4) oder damit verbundenen Teilen schraubbare Gewindespindeln (7, 8), die sich mit ihren unteren Enden (36) in Pfannenlagern (37) auf dem Basisteil (3) abstützen.

6. Manipulator nach Anspruch 5, dadurch gekennzeichnet, daß die eine (7) der beiden weiteren Gewindespindeln (7, 8) axial unverschiebbar am Basisteil (3) gehalten ist, während für die andere Gewindespindel (8) eine freie Abstützung vorgesehen ist.

7. Manipulator nach einem der Ansprüche 1 bis 6, dadurch gekennzeichnet, daß der Tragkörper (4) eine Führung (42) aufweist, in der der Aufsatz (22) verstellbar ist.

8. Manipulator nach Anspruch 7, gekennzeichnet durch einen Spindeltrieb (43, 44, 45) zum Verstellen des Aufsatzes (22) in der Führung (42) des Tragkörpers (4).

9. Manipulator nach einem der Ansprüche 1 bis 8, dadurch gekennzeichnet, daß der Basisteil (3) auf Rädern oder Rollen (51, 52) verfahrbar ist.

10. Manipulator nach den Ansprüchen 7 und 9, dadurch gekennzeichnet, daß die Verfahrrichtung des Basisteiles (3) rechtwinklig zur Verstellrichtung des Aufsatzes (22) relativ zum Tragkörper (4) verläuft.

0202465

FIG. 1

0202465

FIG. 2

0202465

F I G. 3

FIG. 4